# EUROPEAN PATENT SPECIFICATION

(11) **EP 3 876 756 B1**
(45) Date of publication and mention of the grant of the patent: **28.12.2022**
(21) Application number: 19821199.7
(22) Date of filing: 08.11.2019
(51) Int. Cl.: A23N 1/00, A23N 1/02

(54) **MACHINE FOR EXTRACTING PUREE, OR JUICE, FROM FOOD PRODUCTS OF VEGETABLE OR ANIMAL ORIGIN, AND METHOD FOR WASHING SUCH MACHINE**
MASCHINE ZUM EXTRAHIEREN VON PÜREE ODER SAFT AUS NAHRUNGSMITTELN PFLANZLICHEN ODER TIERISCHEN URSPRUNGS UND VERFAHREN ZUM WASCHEN SOLCH EINER MASCHINE
MACHINE D'EXTRACTION DE PURÉE OU DE JUS DE PRODUITS ALIMENTAIRES D'ORIGINE VÉGÉTALE OU ANIMALE ET PROCÉDÉ DE LAVAGE D'UNE TELLE MACHINE

(30) Priority: 08.11.2018 IT 201800010169
(43) Date of publication of application: 15.09.2021
(73) Proprietor: Bertocchi, Alessandro, 43125 Parma (IT)
(72) Inventor: Bertocchi, Alessandro, 43125 Parma (IT)
(74) Representative: De Milato, Francesco
(86) International application number: PCT/IB2019/059621
(87) International publication number: WO 2020/095266

(56) References cited:
- WO-A1-2005/113166
- CN-A- 106 889 632
- CN-A- 107 692 246

## Description

### Field of the invention

The present invention relates to a machine for the food industry, and in particular it relates to a machine for extracting puree, or juice, from food product of vegetable, or animal, origin.

Furthermore, the invention relates to a method for continuous washing a machine for extracting puree, or juice, from a food product.

### Background of the invention

As well known, the industrial extraction of juice and puree, mainly from plant products, such as fruit and vegetables, but also from animal products, such as meat and fish, is carried out by means of rotating machines, such as rough extraction machines and finishing extraction machines.

The rotating machines of prior art comprise, in particular, a rotor which is caused to quickly rotate about a rotation axis by a motor group. More precisely, the rotor is peripherally equipped with a series of blades and is mounted within a perforated wall, or sieve, having cylindrical or conical shape.

During its rotation about the rotation axis, the rotor exerts a centrifugal force to the treated product that causes it to selectively pass through the sieve.

In this way, the part of the product to be used, i.e. the main product containing the puree and the juice, is filtered through the holes of the sieve, conveyed and discharged through a first outlet in order to be, then, subjected to further treatments, whereas a part to be rejected containing, mainly, the skin and the seed axially advance and are discharged through a second outlet.

Rotors are, for example, known that are equipped with curved blades inclined towards the rotation direction, such as for example described in US4643085, rotors with "straight" blades, and rotors with blades inclined in the opposite direction with respect to the rotation direction of the rotor.

The machines for extracting puree and juice from food products are periodically subjected to cleaning operations in order to remove parts of the food product treated in a previous working cycle, that adhere to the parts of the machine and that would pollute the product of a successive working cycle, in particular in the case in which in two successive cycles a different food product is processed.

These cleaning operations, which normally have to be carried out many times in the same working day, and can be repeated every 2 hours, are carried out manually by workers and can last more than an hour. Therefore, these kinds of operations need to stop the machine for a long time, in order to carry out the opening of the machine, and to reach the different parts of the same to be cleaned before assembling again the machine in order to start a new working cycle.

In addition to the above, in order to guarantee that the machine is effectively cleaned, it is necessary to use a washing liquid at a high temperature, normally between 50°C and about 90°C, depending on if it is used water with detergent and sanitizing products such as caustic soda, or only water. In both the cases, however, this kind of cleaning operation has risks for the safety of the workers, in particular if the washing liquid exits the machine, owing to the high temperature of the liquid same, or because it contains the aforementioned additives.

Some examples of plants for cleaning the machines for the food industry having the above described drawbacks are, for example, described in WO2005/113166, CN107692246 and CN106889632.

### Summary of the invention

It is, therefore, an object of the present invention to provide a machine for extracting puree, and/or juice, from a food product, in particular of vegetable, or animal, origin that is able to ensure an effective washing of the machine in order to carry out an accurate cleaning, and, at the same time, to avoid that the washing liquid can exit outside the machine and, therefore, to guarantee that the necessary safety conditions for the workers who work near the machine are met.

It is a further object of the present invention to provide a machine for extracting puree, and/or juice, from a food product, in particular of vegetable, or animal, origin that allows to clean deeply and quickly the machine without disassembling the different parts of the same, and, therefore, that is able to increase the production of the plant in which the machine is installed.

These and other objects are achieved by the machine for extracting puree, or juice, from a food product, said machine comprising:
- an inlet section for introducing the food product;
- an extraction section configured to divide, during an extraction configuration, said food product in a main product comprising said puree, or juice, and in a waste product, in said extraction section a sieve being mounted that has cylindrical, or conical, shape, and that provides a plurality of holes, and a rotor positioned within said sieve and configured to rotate about a rotation axis in such a way to exert a centrifugal force on said food product to force the same against the sieve and to divide the food product in said main product, which passes through said holes of said sieve, and is discharged through a first discharge section, and in a waste product, which, instead, does not pass through said holes of the sieve and is discharged through a second discharge section arranged downstream of said first discharge section with respect to the advancing direction of the product in said extraction section;
- a motor operatively connected to said rotor and configured to cause said rotor to rotate about said rotation axis;
- a washing device of said extraction section configured to feed a predetermined flow of a washing liquid coming from a source, through at least a feeding duct, when said extraction section is arranged to operate in a washing configuration;
whose main characteristic of said extraction machine is to provide, furthermore, an opening/closing device configured to move from an opening configuration, in which is arranged to open said second discharge section in order to allow said waste product to move downstream of said second discharge section, when said extraction section operates in said extraction configuration, and a closing configuration in which said opening/closing device is arranged to close said second discharge section in order to impede said washing liquid to move downstream of said second discharge section, when said extraction section operates in said washing configuration.

Other technical characteristics of the present invention and related embodiments are set out in the dependent claims.

In particular, an additional opening/closing device can be, furthermore, provided arranged to move from an opening configuration, in which the opening/closing device opens the outlet of the food product, when the extraction section operates in the aforementioned extraction configuration, and a closing configuration in which said additional opening/closing device is arranged to close said inlet, when said extraction section operates in said washing configuration.

In an advantageous embodiment, the extraction section can be defined within a main housing body having a first outlet for the main product and a second outlet, arranged downstream of the first outlet with respect to the advancing direction of the treated product, for discharging the waste product. More in particular, the aforementioned second discharge section communicates with the extraction section through the second outlet and provides a discharge duct for discharging the waste product downstream.

Advantageously, the aforementioned opening/closing device comprises at least a movable bulkhead arranged to move between an opening position for opening the second outlet when the extraction section operates in the extraction configuration, and a closing position for closing the second outlet, when the extraction section is arranged in the washing configuration.

Alternatively, or in addition, the opening/closing device can comprise a movable bulkhead arranged to move between an opening position of the discharge duct, when the extraction section operates in the extraction configuration, and a closing position of the discharge duct, when the extraction section is arranged in the washing configuration.

In particular, the opening/closing device can comprise, furthermore, at least an actuation element arranged to cause said, or each, movable bulkhead to move from the closing position to the opening position and vice versa.

Advantageously, the aforementioned second outlet is made at a curved wall of the main housing body of the extraction section. Therefore, in this case, also the aforementioned movable bulkhead can be curved and configured in such a way to be positioned adjacent to the curved wall.

Preferably, between the aforementioned movable bulkhead and the aforementioned wall of said extraction section at which said second outlet is provided, hydraulic sealing elements are provided.

In particular, the aforementioned opening/closing device comprises:
- a first actuation element arranged to displace said movable bulkhead along a first displacement direction; and
- a second actuation element arranged to displace said movable bulkhead along a second displacement direction forming a predetermined angle with the first displacement direction.

Advantageously the aforementioned extraction section, furthermore, provides a third outlet for exiting said washing liquid. In particular, an opening/closing valve is, furthermore, provided configured to open, or close, said third outlet.

In particular, the washing device provides at least a duct configured to feed a determined amount of said washing liquid at said opening/closing valve of said third outlet for washing the same.

Advantageously, the, or each, actuation element is an actuator selected from the group consisting of:
- a pneumatic actuator;
- a hydraulic actuator;
- a mechanical actuator;
- an electro-mechanical actuator.

According to another aspect of the invention, a method for washing a machine for extracting puree, or juice, from a food product, comprises the steps of:
- arranging an extraction section in an extraction configuration in which is arranged to divide a food product that is introduced inside, in a main product comprising said puree, or juice, and a waste product, in said extraction section a sieve being mounted that have a cylindrical, or conical, shape, and that provides a plurality of holes and a rotor positioned within said sieve and configured to rotate about a rotation axis in such a way to exert a centrifugal force on said food product to force the same against the sieve and divide the food product in said main product, which passes through said holes of said sieve, and is discharged through a first discharge section, and in a waste product, which, instead, does not pass through said holes of said sieve and is discharged through a second discharge section arranged downstream of said first discharge section with respect to the advancing direction of the product in said extraction section;
or alternatively;
- arranging said extraction section in a washing configuration during which a predetermined flow of a washing liquid is fed into said extraction section from a source, through at least a feeding duct;
whose main characteristic is to provide a closing step of said second discharge section in order to impede said washing liquid to move downstream of said second discharge section, before arranging said extraction section in said washing configuration, or alternatively, an opening step of said second discharge section for allowing to discharge said waste product from said extraction section, before arranging said extraction section in said extraction configuration.

### Brief description of the drawings

The invention will be now illustrated with the following description of an exemplary embodiment thereof, exemplifying but not limitative, with reference to the attached drawings wherein:
- Fig.1 diagrammatically shows an elevational side view partially sectioned of a machine for extracting puree and/or juice according to the invention;
- Figures from 2A to 2D show section views according to arrows II-II of some alternative embodiments of the machine of figure 1;
- Fig.3 shows an enlargement of a part of figure 2 for showing some constituent components;
- Fig.4 shows a further enlargement of a portion of figure 3 for showing further elements of detail;
- Fig.5 shows a perspective view of a portion of an alternative embodiment of the machine 1 of figure 1;
- Fig.6 shows a section view of a further alternative embodiment of the machine of figure 1;
- Fig.7 diagrammatically shows an elevational side view of another alternative embodiment of the machine of figure 1;
- Fig.8 diagrammatically shows a front view of another alternative embodiment of the machine of figure 1.

### Description of preferred exemplary embodiments

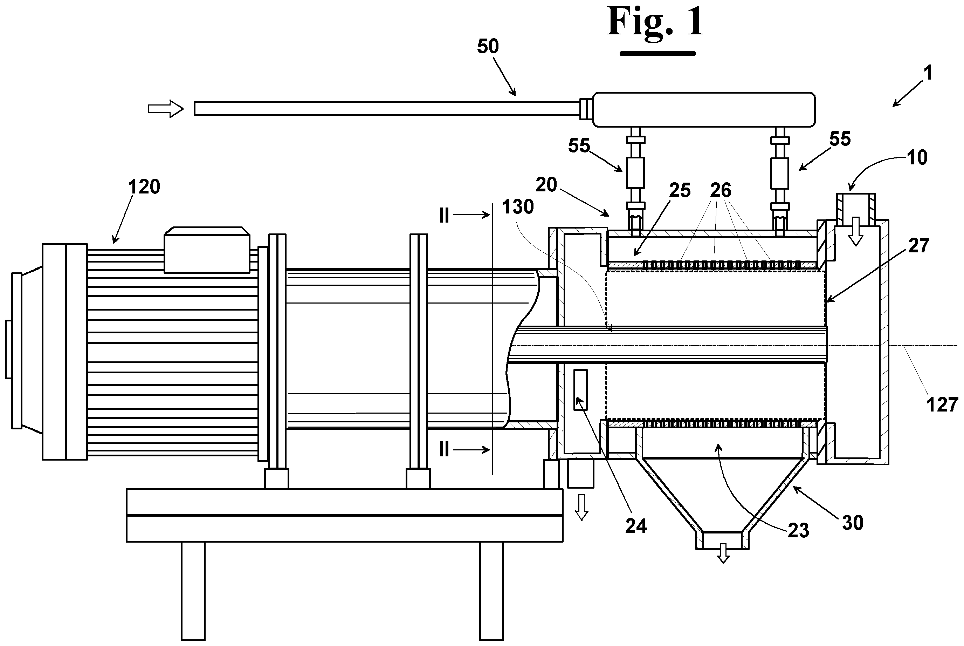

As diagrammatically shown in figure 1, a machine 1 for extracting puree, or juice, from a food product, according to the invention, comprises an inlet section 10 for the introduction of a food product. Downstream of the inlet section 10, an extraction section 20 is provided configured to divide, during an extraction configuration, the food product in a main product comprising the puree, or the juice, and a waste product. In particular, the extraction section 20 provides an inlet 22 through which the food product to be treated moves from the inlet section 10 to the inside. Inside of the extraction section 20, which is advantageously defined by a main housing body 21, a sieve 25 having cylindrical, or conical, shape, and providing a plurality of holes 26, and a rotor 27 mounted within the sieve 25, are positioned. The rotor 27 only the dimension of which is indicated with a broken line in figure 1, can, advantageously, have cylindrical, or conical, shape. More precisely, the rotor 27 is configured to rotate about a rotation axis 127, in such a way to exert a centrifugal force on the food product. The rotor 27 can comprise a plurality of radial blades, see for example US4643085. More precisely, the centrifugal force produced by the blades of rotor 27 on the treated food product forces the product same against the sieve 25. This causes the food product to be divided in a main product, comprising puree, and/or juice, which passes through the holes 26 of the sieve 25, and is discharged from the extraction section though a first discharge section 30, and in a waste product comprising the skin, and the seeds of the food product, which, instead, does not pass through the holes 26 of the sieve 25, and is, therefore, discharged from the extraction section 20 through a second discharge section 40 arranged downstream of the first discharge section 30 along the advancing direction of the food product within the extraction section 20. More in detail, the rotor 27 is mounted on a rotation shaft 127 that is caused to rotate by a motor 120. According to the present invention, the machine 1 provides, furthermore, a washing device 50 configured to feed a predetermined flow of a washing liquid into the extraction section 20. In particular, the washing device 50 comprises a source of washing liquid, which is not shown in the figure for reasons of simplicity, for example water or water and a detergent product, or a sanitizing product, such as caustic soda, i.e. sodium hydroxide.

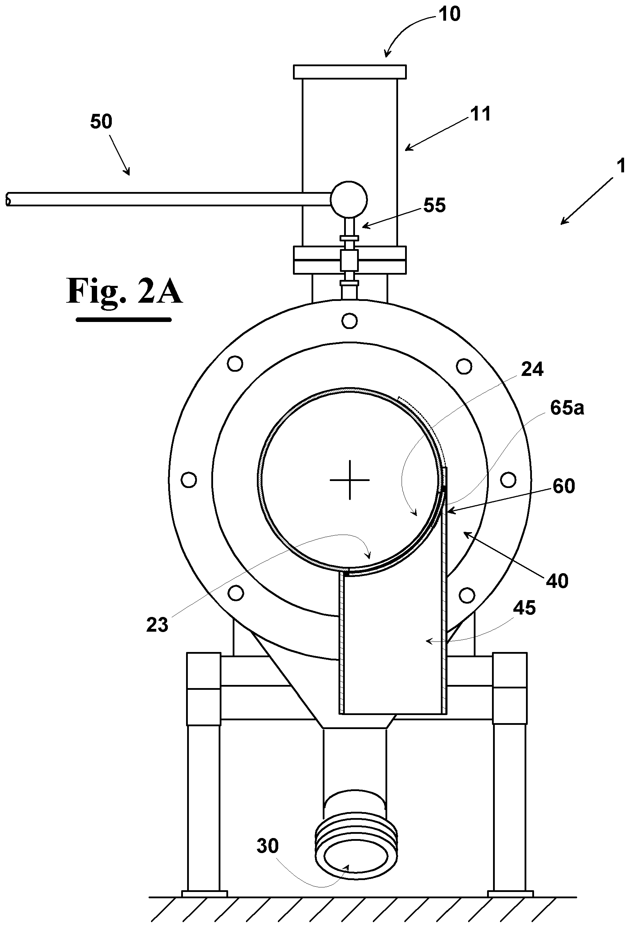

More in detail, the washing device 50 provides at least a feeding duct 55 arranged to deliver a predetermined flow of washing liquid, in particular coming from a source of washing liquid, along a determined delivery direction, into the extraction section 20, when this operates in a washing configuration in order to clean the same. In particular, in the washing configuration the food product is not fed into the extraction section 20. The machine 1, furthermore, provides an opening/closing device 60 configured to move from an opening configuration, in which it opens, i.e. does not obstruct the movement downstream of the second discharge section 40, when the extraction section 20 operates in the extraction configuration, and a closing configuration in which, instead, closes the second discharge section 40, when the extraction section 20 operates in the aforementioned washing configuration. Therefore, with reference to figures 2A-2D, when the extraction section 20 operates in the aforementioned washing configuration, the second discharge section 40 is not in hydraulic communication with the parts of machine 1, or of the plant, positioned downstream of the same. The present invention allows to carry out the continuous washing of the extraction section 20, because the washing liquid that is fed into the extraction section 20 through the, or each, duct 55, is discharged through the first outlet 12. Therefore, the present invention allows, during a machine downtime, i.e. during the aforementioned washing configuration of the extraction section 20, to deeply clean and a sanitize the machine 1, thus avoiding, at the same time, that the washing liquid can come out of the machine 1. In fact, the washing liquid can be dangerous for the workers due to the high temperature at which is normally used (that can be temperatures close to 100°C), but also because it generally contains irritating, or toxic, products, such as caustic soda, i.e. sodium hydroxide, or similar products that are used for deeply sanitizing the machine 1.

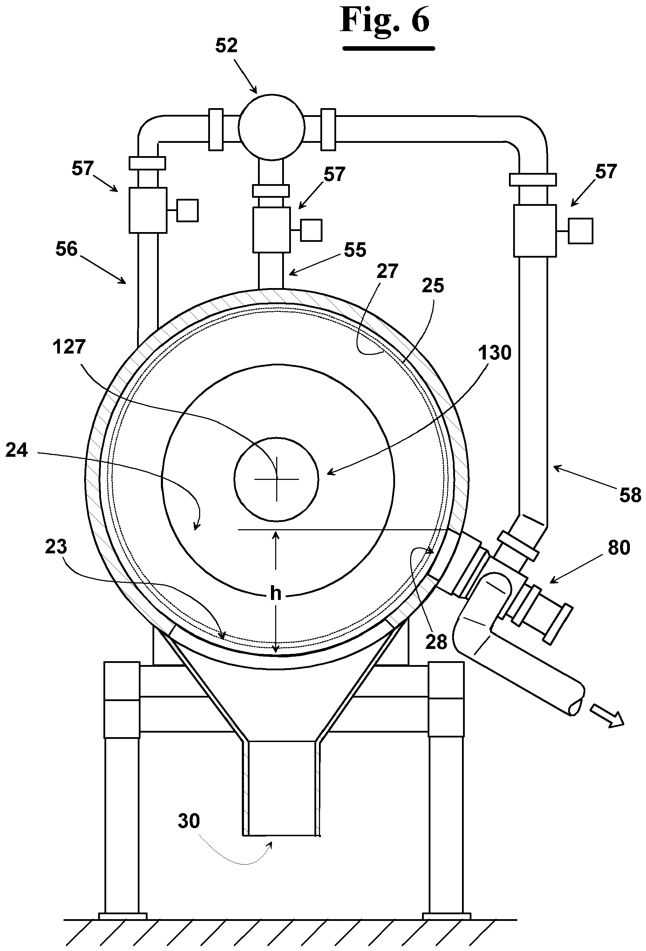

In a preferred embodiment of the invention that is diagrammatically shown in figure 6, an additional opening/closing device 70 is, furthermore, provided arranged to move from an opening configuration, in which it opens the inlet section 10 in order to allow to introduce the food product into the extraction section 20, when this operates in the extraction configuration, and a closing configuration in which, instead, the opening/closing device closes the inlet section 10, when the extraction section 20 operates, instead, in the washing configuration.

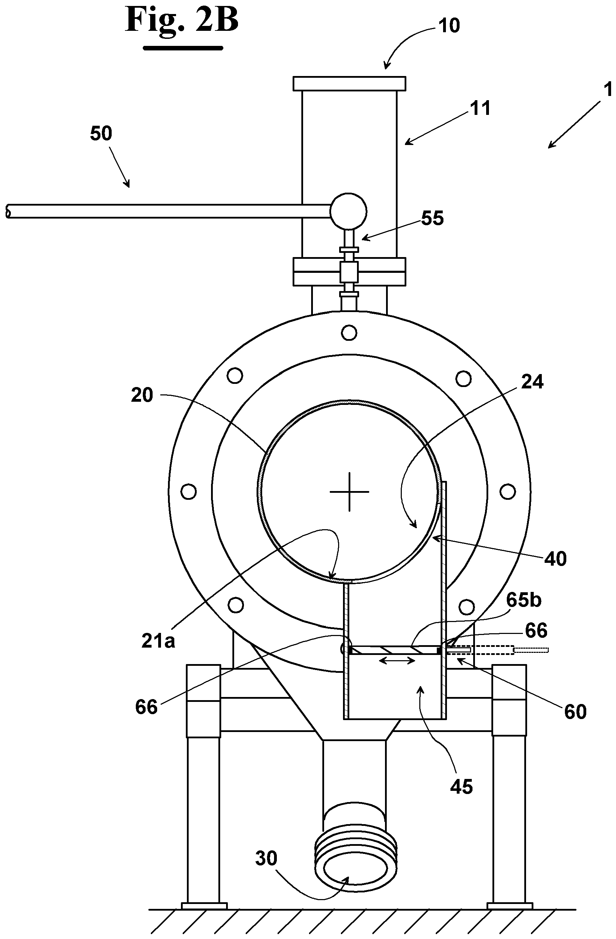

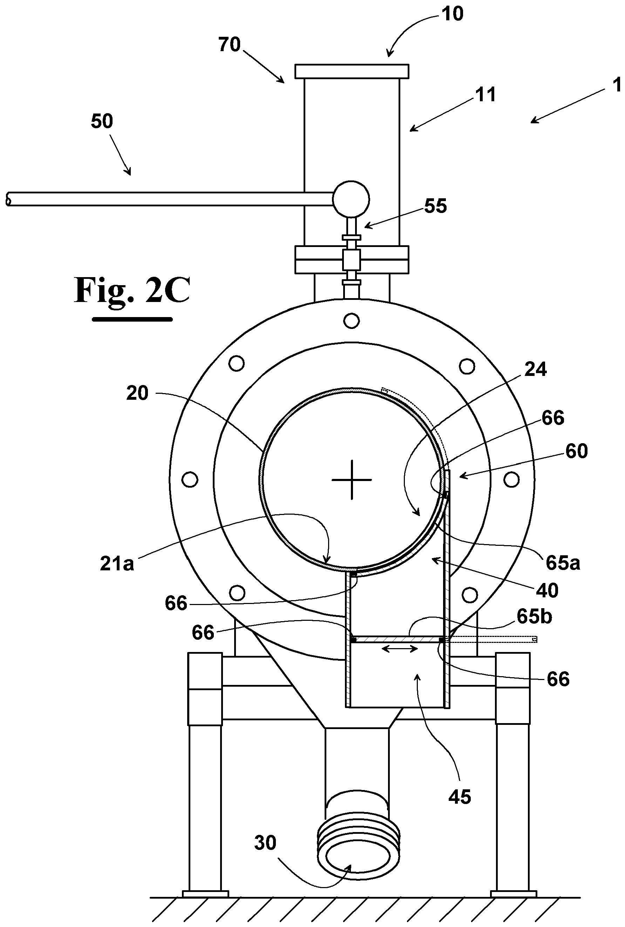

As shown in the figures from 2A to 2D, the aforementioned opening/closing device 60 provides at least a movable bulkhead 65a and/or 65b, arranged at the second outlet 24, and/or the discharge duct 45, and arranged to move from the aforementioned opening position, when the extraction section 20 operates in the extraction configuration, to the aforementioned closing position, when the extraction section 20 operates in the washing configuration. More in particular, according to the embodiment shown in figure 2A, the opening/closing device 60 provides a movable bulkhead 65a at the outlet 24, whilst according to the embodiment shown in figure 2B, the opening/closing device 60 provides a movable bulkhead 65b at the discharge duct 45. Finally, according to the embodiment shown figure 2C, the opening/closing device 60 provides both the movable bulkhead 65a arranged at the outlet 24 and the movable bulkhead 65b arranged at the discharge duct 45.

Analogously to the opening/closing device 60, also the aforementioned additional opening/closing device 70 can comprise a movable bulkhead 75, arranged to move from the aforementioned opening position of the inlet section 10 when the extraction section 20 operates in the extraction configuration, to the closing position, in which it closes the inlet section 10 same, when the extraction section 20 operates in the washing configuration.

The movement of the movable bulkhead 65a, or 65b, or 75, from the opening position to the closing position, and vice versa, can be manually carried out by an operator, for example, acting on a hold portion, that is not shown in the figures for reasons of simplicity.

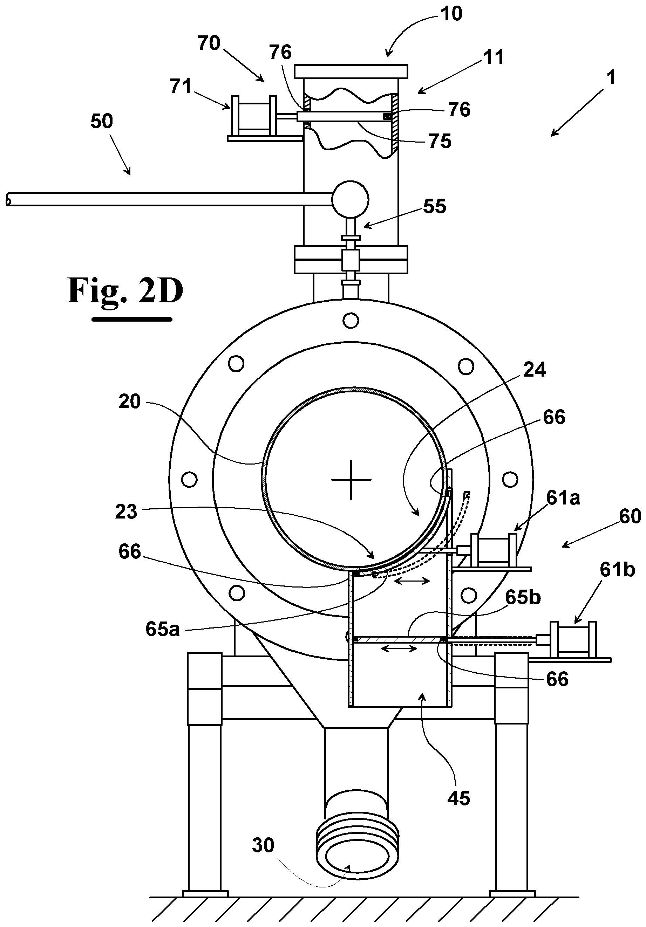

As shown in figure 2D, alternatively, or in addition to the hold portion, the opening/closing device 60 and/or the additional opening/closing device 70 can, furthermore, comprise at least a respective actuation element 61, or 71, arranged to cause the movable bulkhead 65a, 65b, or 75 associated to the same, to move from the closing position to the opening position, and vice versa. For example, in the embodiment of figure 1, the actuation element 61, or 71, is an actuator, for example a pneumatic actuator, or an actuator of another type, such as a mechanical actuator, an electro-mechanic actuator, an hydraulic actuator, etc.

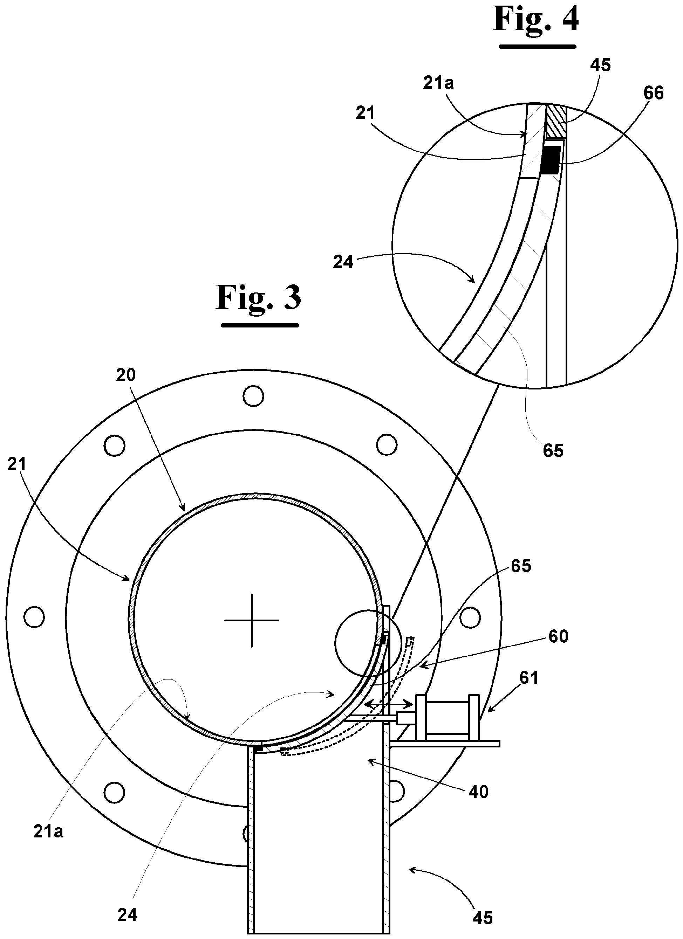

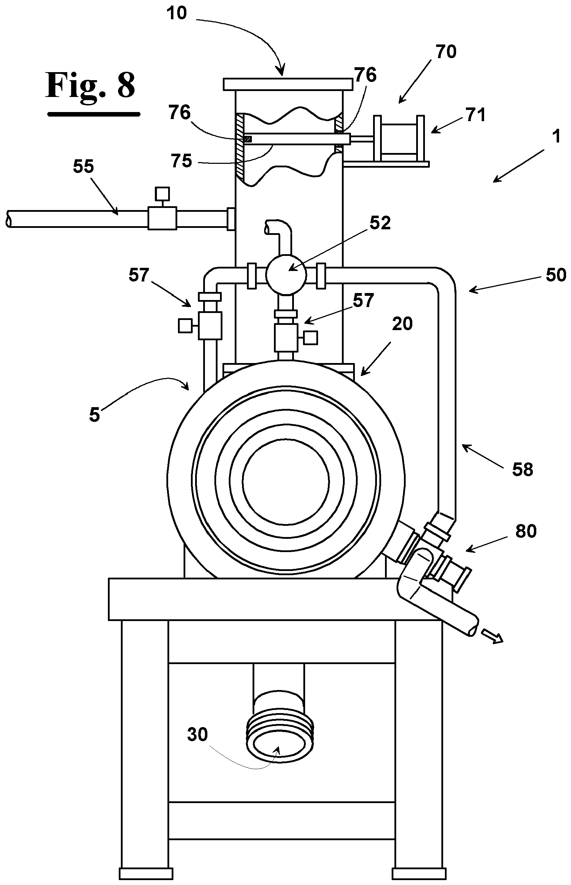

As shown in detail in the figures 2A-2D, the second outlet 24 can be provided at a curved wall 21a of the main housing body 21 of machine 1. Therefore, in this case, also the movable bulkhead 65a will be advantageously curved and configured in such a way that it can be positioned adjacent to the curved wall 21a. In particular, as can be easily understood, if the bulkhead 65 is arranged to be positioned adjacent to the curved wall 21a from the external side, the bend radius of the movable bulkhead 65 will be slightly greater than the curved wall 21a. As shown in detail in figure 4, between the movable bulkhead 65a and wall 21a of the extraction section 20 at which the second outlet 24 is provided, hydraulic sealing elements 66 are provided. Analogously, also between the additional movable bulkhead 75 and the inlet section 10, or more precisely an inlet duct 11 of which it is provided, hydraulic sealing elements 76 can be provided (figures 2D and 8). In this way, it is assured that the washing liquid, which, as above anticipated, can be dangerous for the workers, does not exit the machine 1, or more precisely, does not exit the related hydraulic circuit. This can be, for example, directly connected to the discharge of the plant.

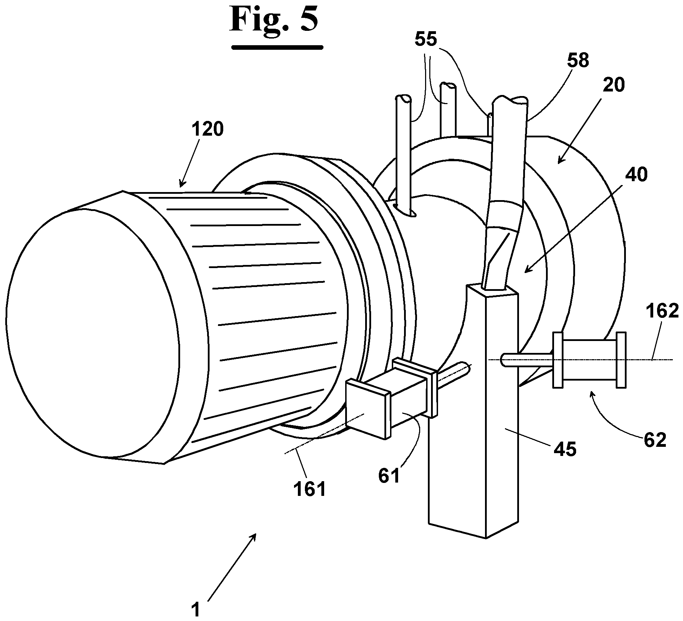

In an advantageous embodiment, that is diagrammatically shown in figure 5, the opening/closing device 60 comprises a first actuation element 61 arranged to move the movable bulkhead 65a along a first displacement direction 161, for example a direction substantially longitudinal to the extraction section 20, and a second actuation element 62 arranged to move the movable bulkhead 65a along a second direction 162 forming a predetermined angle with the first displacement direction, for example a direction that is substantially radial to the extraction section 20, or a direction forming a predetermined angle with the direction that is tangential to the extraction section 20. In this way, it is possible to displace the movable bulkhead 65 in a very accurate way and minimizing the encumbrance of the opening/closing device 60. This constructive solution is particularly advantageous in the case in which the movable bulkhead 65 is curved because the actuation element 61 moves the movable bulkhead 65a same between a closing position of outlet 24 and an opening position of the same in which the movable bulkhead 65a does not obstruct outlet 24. The actuation element 62 pushes, then, the movable bulkhead 65a, once this has been arranged in front of the second outlet 24, against the curved wall 21a, in order to provide a hydraulic tightening, in particular carried out by the sealing elements 66 above described.

In the further embodiment that is shown in figure 6, the extraction section 20 provides a third outlet 28, which can have different functions, in particular it can be used as emergency exit, or as exit for the washing liquid during the continuous washing of the machine 1. More in particular, if the washing liquid exits the machine 1 through the first outlet 23, i.e. the outlet through which, in working conditions of machine 1 in the extraction configuration, the main product is discharged, the outlet 28 arranged at a predetermined height h from the bottom of the extraction section 20, acts as an overflow exit. More precisely, if the level of washing liquid inside the extraction section 20 exceeds a predetermined threshold level value, that is the height at which outlet 28 is positioned, the washing liquid same is discharged through the outlet 28 same. More in detail, the height h at which outlet 28 is provided is less than the height at which the shaft 130, on which the rotor 27 is mounted, is arranged. This because the shaft 130 is, normally, mounted on bearings, which, if come into contact with the hot water that is used for cleaning the machine 1, and that can be corrosive due to the presence of the caustic soda, could be damaged and, therefore, should be replaced. Still as shown in figure 6, the outlet 28 can be associated to an opening/closing valve 80. This is arranged to open the third outlet 28 during the washing of the machine 1 and to close the same during the extraction step, i.e. when the extraction section 20 is arranged in the aforementioned extraction configuration.

The washing device 50 can provide ducts 56 arranged to deliver a determined amount of washing liquid at the opening/closing device 60 and at least a washing duct 58 arranged to deliver the washing liquid directly at the opening/closing valve 80, if present, in such a way to accurately clean these parts of machine 1 too. The different feeding ducts 55 and 56 can be all hydraulically connected to the same source of liquid, not shown in the figures for reasons of simplicity, through a hydraulic collector 52 which provides to feed the different ducts 55, 56. Each feeding duct 55 and 56 can be, furthermore, associated to a respective electro-valve 57 which opens, or closes, the duct 55, 56.

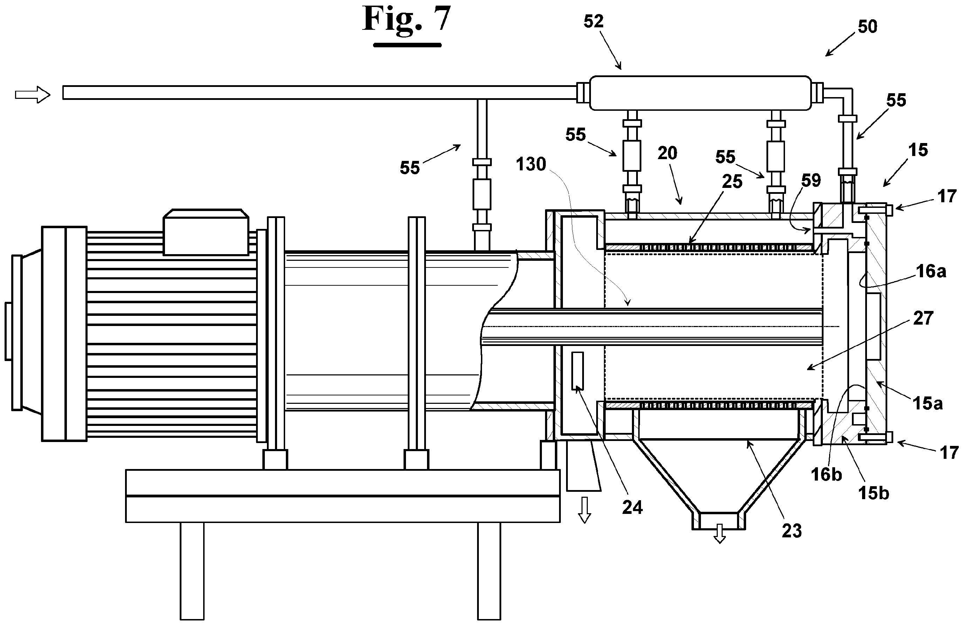

As diagrammatically shown in figure 7, the inlet section 10 can comprise a first flange portion 15a and a second flange portion 15b mutually engaged one another, in particular by bolts 17, and arranged, in use, to be arranged adjacent at respective contact faces 16a and 16b. As still diagrammatically shown in figure 7, the second flange portion 15b provides at least a washing hole 59 that is hydraulically connected to the source of the washing liquid through a respective feeding duct 55. In particular, in the embodiment of figure 7, la flange portion 15b washing liquid and configured to feed into said extraction section 20 a substantially longitudinal flow. For example, the feeding duct 55 can be hydraulically connected to the washing hole 59 through a hydraulic circuit comprising a passage that is made in the first, and/or the second flange portion 15a, 15b.

In the alternative embodiment of figure 8, the machine for extracting puree, and/or juice, from a food product provides, a monte of the extraction section 20, a softening section 5, for example of the type described in EP0511174, that can be seen only partially in figure 8, because hidden by the extraction section 20. In particular, in the machine 1 of figure 8, the food product once softened can be transferred from the softening section 5 to the extraction section 20 along an axial direction. In this case, the inlet section 10 of the food product into the softening section 5 can be associated to the additional opening/closing device 70 above described with reference to figures 2A-2D. Furthermore, in this case, the washing device 50 can also provide a feeding duct 55 arranged to feed a determined flow of washing liquid a monte of the softening section 5 in order to carry out the cleaning of this part of the machine 1.

## Claims

1. A machine for extracting puree, or juice, from a food product, comprises:
- an inlet section (10) for introducing the food product;
- an extraction section (20) configured to divide, during an extraction configuration, said food product in a main product comprising said puree, or juice, and in a waste product, in said extraction section a sieve (25) being mounted that have cylindrical, or conical, shape, and that provides a plurality of holes (26), and a rotor (27) positioned within said sieve (25) and configured to rotate about a rotation axis (125) in such a way to exert a centrifugal force on said food product in order to force the same against said sieve (25) and to divide the product in said main product, which passes through said holes (26) of said sieve (25), and is discharged through a first discharge section (30), and in said waste product, which, instead, does not pass through said holes of said sieve (25) and is discharged through a second discharge section (40) arranged downstream of said first discharge section (30) with respect to the advancing direction of the product in said extraction section (20);
- a motor (120) operatively connected to said rotor (27) and configured to cause said rotor (27) to rotate about said rotation axis (127);
- a washing device (50) configured to feed in said extraction section (20) a predetermined flow of a washing liquid from a source through at least a feeding duct (55), when said extraction section (20) operates in a washing configuration;
said machine (1) being **characterized in that** an opening/closing device (60) is, furthermore, provided configured to move from an opening configuration, in which is arranged to open said second discharge section (40) to allow said waste product to move downstream of said second discharge section (40) when said extraction section (20) is arranged to operate in said extraction configuration, and a closing configuration in which said opening/closing device (60) is arranged to close said second discharge section (40) in order to impede said washing liquid to move downstream of said second discharge section (40), when said extraction section (20) is arranged to operate in said washing configuration.

2. Machine for extracting puree, or juice, from a food product according to claim 1, wherein an additional opening/closing device (70) is, furthermore, provided arranged to move from an opening configuration, in which is arranged to open said inlet section (10) thus allowing said food product to be introduced, when said extraction section (20) is arranged to operate in said extraction configuration, and a closing configuration in which said additional opening/closing device (70) is arranged to close said inlet section in such a way to impede said food product to be introduced, when said extraction section (20) is arranged to operate in said washing configuration.

3. Machine for extracting puree, or juice, from a food product according to claim 1, wherein said extraction section (20) is defined by a main housing body (21) having a first outlet (23) for discharging said main product and a second outlet (24), arranged downstream of said first outlet (23) with respect to the advancing direction of said treated product in said extraction section (20) for discharging said waste product, said second discharge section (40) being in communication with said extraction section (20) through said second outlet (24) and a discharge duct (45) being provided for discharging said waste product downstream of said second discharge section (40), said opening/closing device (60) comprising at least a movable bulkhead (65a, 65b) arranged to move between an opening position of said second outlet (24) and/or said discharge duct (45) when said extraction section (20) is arranged to operate in said extraction configuration, and a closing position for closing said second outlet (24) and/or said discharge duct (45), when said extraction section (20) is arranged in said washing configuration.

4. Machine for extracting puree, or juice, from a food product according to claim 3, wherein said opening/closing device (60), furthermore, comprises at least an actuation element (61) arranged to cause said, or each, movable bulkhead (65a,65b) to move from said closing position to said opening position, and vice versa.

5. Machine for extracting puree, or juice, from a food product according to claim 3, or 4, wherein said second outlet (24) is made at a curved wall (21a) of said main housing body (21).

6. Machine for extracting puree, or juice, from a food product according to claim 5, wherein also said movable bulkhead (65a) is curved and is configured in such a way to be positioned adjacent to said curved wall (21a).

7. Machine for extracting puree, or juice, from a food product according to claim 2, wherein said additional opening/closing device (70) provides an additional movable bulkhead (75) associated to an actuation element (71), said actuation element (71) being configured to move said additional movable bulkhead (75) between said opening configuration and said closing configuration of said inlet section (10), or vice versa.

8. Machine for extracting puree, or juice, from a food product, according to anyone of the claims 3 to 7, wherein between said, or each, movable bulkhead (65a,65b) and said main housing body (21) of said extraction section (20) and/or said discharge duct (45) hydraulic sealing elements (66) are provided.

9. Machine for extracting puree, or juice, from a food product according to claim 7, wherein between said additional movable bulkhead (75) and an inlet duct (11) of said inlet section (10) hydraulic sealing elements (76) are provided.

10. Machine for extracting puree, or juice, from a food product, according to anyone of the previous claims, wherein said extraction section (20) provides, furthermore, a third outlet (28) for discharging said washing liquid, and an opening/closing valve (80) being provided configured to open, or close, said third outlet (28), and wherein said washing device (50) provides at least a washing duct (58) configured to feed a predetermined amount of said washing liquid at said opening/closing valve (80) of said third outlet (28) for cleaning the same.

11. Machine for extracting puree, or juice, from a food product according to claim 10, wherein said third outlet (28) is positioned at a predetermined height (h) from the bottom of said extraction section (20), in such a way that, when the level of washing liquid inside said extraction section (20) exceeds a predetermined threshold level corresponding to said predetermined height (h), the washing liquid is discharged through said third outlet (28).

12. Machine for extracting puree, or juice, from a food product according to claim 11, wherein said rotor (27) is actuated by said motor (120) by a shaft (130) and wherein said predetermined height (h) is less than the height at which said shaft (130) is positioned.

13. Machine for extracting puree, or juice, from a food product according to anyone of the previous claims, wherein said inlet section (10) comprises a first flange portion (15a) and a second flange portion (15b) arranged, in use, to be positioned adjacent at respective contact faces (16a,16b), and mutually engaging one another, said second flange portion (15b) providing at least a washing hole (59) hydraulically connected to said source of said washing liquid and configured to deliver into said extraction section (20) a flow of said washing liquid having a direction that is substantially longitudinal to said extraction section (20).

14. Machine for extracting puree, or juice, from a food product according to claim 4, wherein said, or each, actuation element is an actuator selected from the group consisting of:
- a pneumatic actuator;
- a hydraulic actuator;
- a mechanical actuator;
- an electro-mechanical actuator.

15. Method for cleaning a machine for extracting puree, or juice, from a food product, said method comprising the steps of:
- arranging an extraction section in an extraction configuration in which is arranged to divide a food product entering the machine, in a main product comprising said puree, or juice, and in a waste product, in said extraction section a sieve being mounted that have cylindrical, or conical, shape, and that provides a plurality of holes, and a rotor positioned within said sieve and configured to rotate about a rotation axis in such a way to exert a centrifugal force on said food product in order to force the same against the sieve and to divide the food product in said main product, which passes through said holes of said sieve, and is discharged through a first discharge section, and in a waste product, which, instead, does not pass through said holes of said sieve and is discharged through a second discharge section arranged downstream of said first discharge section with respect to the advancing direction of the product in said extraction section; or alternatively;
- arranging said extraction section in a washing configuration during which a predetermined flow of a washing liquid is fed into said extraction section from a source, through at least a feeding duct;
said method being **characterized in that** it provides a closing step for closing said second discharge section in order to impede the movement of said washing liquid downstream of said second discharge section before arranging said extraction section in said washing configuration, or alternatively, an opening step for opening said second discharge section in order to allow to discharge said waste product from said extraction section, before arranging said extraction section in said extraction configuration.

## Patentansprüche

1. Maschine zum Extrahieren von Püree oder Saft aus einem Nahrungsmittel, umfassend:
- einen Einlassabschnitt (10) zum Einführen des Nahrungsmittels;
- einen Extraktionsabschnitt (20), der dazu konfiguriert ist, während einer Extraktionskonfiguration das Nahrungsmittel in ein Hauptprodukt, das das Püree oder den Saft umfasst, und in ein Abfallprodukt zu trennen, wobei in dem Extraktionsabschnitt ein Sieb (25), das eine zylindrische oder konische Form aufweist und das eine Vielzahl von Löchern (26) bereitstellt, montiert ist, und ein Rotor (27) in dem Sieb (25) positioniert und dazu konfiguriert ist, sich um eine Rotationsachse (125) derart zu drehen, dass eine Zentrifugalkraft auf das Nahrungsmittel ausgeübt wird, um es gegen das Sieb (25) zu drücken und das Nahrungsmittel in das Hauptprodukt, das durch die Löcher (26) des Siebs (25) hindurchtritt und durch einen ersten Austragsabschnitt (30) ausgetragen wird, und das Abfallprodukt zu trennen, das dagegen nicht durch die Löcher des Siebs (25) hindurchtritt und durch einen zweiten Austragsabschnitt (40) ausgetragen wird, der stromabwärts des ersten Austragsabschnitts (30) in Bezug auf die Vorschubrichtung des Nahrungsmittels in dem Extraktionsabschnitt (20) angeordnet ist;
- einen Motor (120), der mit dem Rotor (27) wirkverbunden und dazu konfiguriert ist, zu bewirken, dass sich der Rotor (27) um die Rotationsachse (127) dreht;
- eine Waschvorrichtung (50), die dazu konfiguriert ist, in den Extraktionsabschnitt (20) einen vorbestimmten Strom einer Waschflüssigkeit von einer Quelle durch mindestens eine Einspeiseleitung (55) einzuspeisen, wenn der Extraktionsabschnitt (20) in einer Waschkonfiguration arbeitet;
wobei die Maschine (1) **dadurch gekennzeichnet ist, dass** ferner eine Öffnungs-/Schließvorrichtung (60) bereitgestellt ist, die dazu konfiguriert ist, sich von einer Öffnungskonfiguration, in der sie so angeordnet ist, dass sie den zweiten Austragsabschnitt (40) öffnet, um es dem Abfallprodukt zu ermöglichen, sich stromabwärts des zweiten Austragsabschnitts (40) zu bewegen, wenn der Extraktionsabschnitt (20) angeordnet ist, um in der Extraktionskonfiguration zu arbeiten, und einer Schließkonfiguration zu bewegen, in der die Öffnungs-/Schließvorrichtung (60) angeordnet ist, um den zweiten Austragsabschnitt (40) zu schließen, um zu verhindern, dass sich die Waschflüssigkeit stromabwärts des zweiten Austragsabschnitts (40) bewegt, wenn der Extraktionsabschnitt (20) so angeordnet ist, dass er in der Waschkonfiguration arbeitet.

2. Maschine zum Extrahieren von Püree oder Saft aus einem Nahrungsmittel nach Anspruch 1, wobei ferner eine zusätzliche Öffnungs-/Schließvorrichtung (70) bereitgestellt ist, die angeordnet ist, um sich von einer Öffnungskonfiguration, in der sie angeordnet ist, um den Einlassabschnitt (10) zu öffnen, wodurch ein Einführen des Nahrungsmittels ermöglicht wird, wenn der Extraktionsabschnitt (20) so angeordnet ist, dass er in der Extraktionskonfiguration arbeitet, und einer Schließkonfiguration zu bewegen, in der die zusätzliche Öffnungs-/Schließvorrichtung (70) so angeordnet ist, dass sie den Einlassabschnitt derart schließt, dass das Einführen des Nahrungsmittels verhindert wird, wenn der Extraktionsabschnitt (20) so angeordnet ist, dass er in der Waschkonfiguration arbeitet.

3. Maschine zum Extrahieren von Püree oder Saft aus einem Nahrungsmittel nach Anspruch 1, wobei der Extraktionsabschnitt (20) durch einen Hauptgehäusekörper (21) definiert ist, der einen ersten Auslass (23) zum Austragen des Hauptprodukts und einen zweiten Auslass (24), der stromabwärts des ersten Auslasses (23) in Bezug auf die Vorschubrichtung des behandelten Nahrungsmittels in dem Extraktionsabschnitt (20) angeordnet ist, zum Austragen des Abfallprodukts aufweist, wobei der zweite Austragsabschnitt (40) mit dem Extraktionsabschnitt (20) durch den zweiten Auslass (24) in Verbindung steht und eine Austragsleitung (45) zum Austragen des Abfallprodukts stromabwärts des zweiten Austragsabschnitts (40) bereitgestellt ist, wobei die Öffnungs-/Schließvorrichtung (60) mindestens eine bewegliche Trennwand (65a, 65b) umfasst, die angeordnet ist, um sich zwischen einer Öffnungsposition des zweiten Auslasses (24) und/oder der Austragsleitung (45), wenn der Extraktionsabschnitt (20) angeordnet ist, um in der Extraktionskonfiguration zu arbeiten, und einer Schließposition zum Schließen des zweiten Auslasses (24) und/oder der Austragsleitung (45), wenn der Extraktionsabschnitt (20) in der Waschkonfiguration angeordnet ist, zu bewegen.

4. Maschine zum Extrahieren von Püree oder Saft aus einem Nahrungsmittel nach Anspruch 3, wobei die Öffnungs-/Schließvorrichtung (60) ferner mindestens ein Betätigungselement (61) umfasst, das so angeordnet ist, dass es bewirkt, dass sich die oder jede bewegliche Trennwand (65a , 65b) von der Schließposition in die Öffnungsposition und umgekehrt bewegt.

5. Maschine zum Extrahieren von Püree oder Saft aus einem Nahrungsmittel nach Anspruch 3 oder 4, wobei der zweite Auslass (24) an einer gekrümmten Wand (21a) des Hauptgehäusekörpers (21) hergestellt ist.

6. Maschine zum Extrahieren von Püree oder Saft aus einem Nahrungsmittel nach Anspruch 5, wobei auch die bewegliche Trennwand (65a) gekrümmt und so konfiguriert ist, dass sie angrenzend an die gekrümmte Wand (21a) angeordnet ist.

7. Maschine zum Extrahieren von Püree oder Saft aus einem Nahrungsmittel nach Anspruch 2, wobei die zusätzliche Öffnungs-/Schließvorrichtung (70) eine zusätzliche bewegliche Trennwand (75) bereitstellt, die einem Betätigungselement (71) zugeordnet ist, wobei das Betätigungselement (71) dazu konfiguriert ist, die zusätzliche bewegliche Trennwand (75) zwischen der Öffnungskonfiguration und der Schließkonfiguration des Einlassabschnitts (10) oder umgekehrt zu bewegen.

8. Maschine zum Extrahieren von Püree oder Saft aus einem Nahrungsmittel nach einem der Ansprüche 3 bis 7, wobei zwischen der oder jeder beweglichen Trennwand (65a, 65b) und dem Hauptgehäusekörper (21) des Extraktionsabschnitts (20) und/oder der Austragsleitung (45) hydraulische Dichtelemente (66) bereitgestellt sind.

9. Maschine zum Extrahieren von Püree oder Saft aus einem Nahrungsmittel nach Anspruch 7, wobei zwischen der zusätzlichen beweglichen Trennwand (75) und einer Einlassleitung (11) des Einlassabschnitts (10) hydraulische Dichtungselemente (76) bereitgestellt sind.

10. Maschine zum Extrahieren von Püree oder Saft aus einem Nahrungsmittel nach einem der vorhergehenden Ansprüche, wobei der Extraktionsabschnitt (20) ferner einen dritten Auslass (28) zum Austragen der Waschflüssigkeit bereitstellt und ein Öffnungs-/Schließventil (80) bereitgestellt ist, um den dritten Auslass (28) zu öffnen oder zu schließen, und wobei die Waschvorrichtung (50) mindestens eine Waschleitung (58) bereitstellt, die dazu konfiguriert ist, eine vorbestimmte Menge der Waschflüssigkeit an dem Öffnungs-/Schließventil (80) des dritten Auslasses (28) zum Reinigen desselben einzuspeisen.

11. Maschine zum Extrahieren von Püree oder Saft aus einem Nahrungsmittel nach Anspruch 10, wobei der dritte Auslass (28) in einer vorbestimmten Höhe (h) vom Boden des Extraktionsabschnitts (20) derart positioniert ist, dass, wenn der Pegel der Waschflüssigkeit innerhalb des Extraktionsabschnitts (20) einen vorbestimmten Schwellenpegel übersteigt, der der vorbestimmten Höhe (h) entspricht, die Waschflüssigkeit durch den dritten Auslass (28) ausgetragen wird.

12. Maschine zum Extrahieren von Püree oder Saft aus einem Nahrungsmittel nach Anspruch 11, wobei der Rotor (27) durch den Motor (120) über eine Welle (130) angetrieben wird und wobei die vorbestimmte Höhe (h) kleiner als die Höhe ist, an der die Welle (130) positioniert ist.

13. Maschine zum Extrahieren von Püree oder Saft aus einem Nahrungsmittel nach einem der vorangehenden Ansprüche, wobei der Einlassabschnitt (10) einen ersten Flanschabschnitt (15a) und einen zweiten Flanschabschnitt (15b) umfasst, die angeordnet sind, um im Gebrauch angrenzend an jeweiligen Kontaktflächen (16a, 16b) positioniert zu werden, und ineinander eingreifen, wobei der zweite Flanschabschnitt (15b) mindestens ein Waschloch (59) bereitstellt, das hydraulisch mit der Quelle der Waschflüssigkeit verbunden und dazu konfiguriert ist, in den Extraktionsabschnitt (20) einen Strom der Waschflüssigkeit zu liefern, der eine Richtung aufweist, die im Wesentlichen längs zu dem Extraktionsabschnitt (20) verläuft.

14. Maschine zum Extrahieren von Püree oder Saft aus einem Nahrungsmittel nach Anspruch 4, wobei das oder jedes Betätigungselement ein Aktuator ist, der aus der Gruppe ausgewählt ist, die besteht aus:
- einem pneumatischen Aktuator;
- einem hydraulischen Aktuator;
- einem mechanischen Aktuator;
- einem elektromechanischen Aktuator.

15. Verfahren zum Reinigen einer Maschine zum Extrahieren von Püree oder Saft aus einem Nahrungsmittel, wobei das Verfahren die folgenden Schritte umfasst:
- Anordnen eines Extraktionsabschnitts in einer Extraktionskonfiguration, in dem er angeordnet ist, um ein Nahrungsmittel, das in die Maschine eintritt, in ein Hauptprodukt, das das Püree oder den Saft umfasst, und in ein Abfallprodukt zu trennen, wobei in dem Extraktionsabschnitt ein Sieb, das eine zylindrische oder konische Form aufweist und das eine Vielzahl von Löchern bereitstellt, montiert ist und ein Rotor in dem Sieb positioniert und dazu konfiguriert ist, sich um eine Rotationsachse derart zu drehen, dass eine Zentrifugalkraft auf das Nahrungsmittel ausgeübt wird, um es gegen das Sieb zu drücken und das Nahrungsmittel in das Hauptprodukt, das durch die Löcher des Siebs hindurchtritt und durch einen ersten Austragsabschnitt ausgetragen wird, und ein Abfallprodukt zu trennen, das dagegen nicht durch die Löcher des Siebs hindurchtritt und durch einen zweiten Austragsabschnitt ausgetragen wird, der stromabwärts des ersten Austragsabschnitts in Bezug auf die Vorschubrichtung des Nahrungsmittels in dem Extraktionsabschnitt angeordnet ist; oder alternativ;
- Anordnen des Extraktionsabschnitts in einer Waschkonfiguration, während der ein vorbestimmter Strom einer Waschflüssigkeit in den Extraktionsabschnitt von einer Quelle durch mindestens eine Einspeiseleitung eingespeist wird;
wobei das Verfahren **dadurch gekennzeichnet ist, dass** es einen Schließschritt zum Schließen des zweiten Austragsabschnitts, um die Bewegung der Waschflüssigkeit stromabwärts des zweiten Austragsabschnitts vor einem Anordnen des Extraktionsabschnitts in der Waschkonfiguration zu verhindern, oder alternativ einen Öffnungsschritt zum Öffnen des zweiten Austragsabschnitts bereitstellt, um ein Austragen des Abfallprodukts aus dem Extraktionsabschnitt vor dem Anordnen des Extraktionsabschnitts in der Extraktionskonfiguration zu ermöglichen.

## Revendications

1. Machine destiné à l'extraction de purée, ou de jus, d'un produit alimentaire, comprend :
- une section d'entrée (10) destinée à l'introduction du produit alimentaire ;
- une section d'extraction (20) conçue pour séparer, durant une configuration d'extraction, ledit produit alimentaire en un produit principal comprenant ladite purée, ou ledit jus, et en un produit résiduaire, dans ladite section d'extraction un tamis (25) étant monté qui possède une forme cylindrique, ou conique, et qui fournit une pluralité de trous (26), et un rotor (27) positionné à l'intérieur dudit tamis (25) et conçu pour tourner autour d'un axe de rotation (125) d'une façon telle qu'une force centrifuge est exercée sur ledit produit alimentaire afin de le forcer contre ledit tamis (25) et de séparer le produit dans ledit produit principal, qui passe à travers lesdits trous (26) dudit tamis (25), et est évacué à travers une première section d'évacuation (30), et en ledit produit résiduaire, qui, à la place, ne passe pas à travers lesdits trous dudit tamis (25) et est évacué à travers une seconde section de évacue (40) agencée en aval de ladite première section d'évacuation (30) par rapport à la direction d'avance du produit dans ladite section d'extraction (20) ;
- un moteur (120) relié fonctionnellement audit rotor (27) et conçu pour amener ledit rotor (27) à tourner autour dudit axe de rotation (127) ;
- un dispositif de lavage (50) conçu pour introduire dans ladite section d'extraction (20) un flux de liquide de lavage en provenance d'une source à travers au moins un conduit d'alimentation (55), lorsque ladite section d'extraction (20) fonctionne dans une configuration de lavage ;
ladite machine (1) étant **caractérisée en ce qu'**un dispositif d'ouverture/fermeture (60) est, en outre, prévu conçu pour passer d'une configuration d'ouverture, dans laquelle il est agencé pour ouvrir ladite seconde section d'évacuation (40) pour permettre audit produit résiduaire de se déplacer en aval de ladite seconde section d'évacuation (40) lorsque ladite section d'extraction (20) est agencée pour fonctionner dans ladite configuration d'extraction, et une configuration de fermeture dans laquelle ledit dispositif d'ouverture/fermeture (60) est agencé pour fermer ladite seconde section d'évacuation (40) afin d'empêcher ledit liquide de lavage de se déplacer en aval de ladite seconde section d'évacuation (40), lorsque ladite section d'extraction (20) est agencée pour fonctionner dans ladite configuration de lavage.

2. Machine destinée à l'extraction de purée, ou de jus, d'un produit alimentaire selon la revendication 1, un dispositif d'ouverture/fermeture supplémentaire (70) étant, en outre, prévu agencé pour se déplacer d'une configuration d'ouverture, dans laquelle il est agencé pour ouvrir ladite section d'entrée (10) permettant ainsi l'introduction dudit produit alimentaire, lorsque ladite section d'extraction (20) est agencée pour fonctionner dans ladite configuration d'extraction, et une configuration de fermeture dans laquelle ledit dispositif d'ouverture/fermeture supplémentaire (70) est agencé pour fermer ladite section d'entrée d'une façon telle que l'introduction dudit produit alimentaire est empêchée, lorsque ladite section d'extraction (20) est agencée pour fonctionner dans ladite configuration de lavage.

3. Machine destinée à l'extraction de purée, ou de jus, d'un produit alimentaire selon la revendication 1, ladite section d'extraction (20) étant définie par un corps de logement principal (21) possédant une première sortie (23) destinée à évacuer ledit produit principal et une deuxième sortie (24), agencée en aval de ladite première sortie (23) par rapport à la direction d'avancement dudit produit traité dans ladite section d'extraction (20) pour évacuer ledit produit résiduaire, ladite seconde section d'évacuation (40) étant en communication avec ladite section d'extraction (20) à travers ladite deuxième sortie (24) et un conduit d'évacuation (45) étant prévu pour évacuer ledit produit résiduaire en aval de ladite seconde section d'évacuation (40), ledit dispositif d'ouverture/fermeture (60) comprenant au moins une cloison mobile (65a, 65b) agencée pour se déplacer entre une position d'ouverture de ladite deuxième sortie (24) et/ou dudit conduit d'évacuation (45) lorsque ladite section d'extraction (20) est agencée pour fonctionner dans ladite configuration d'extraction, et une position de fermeture pour fermer ladite deuxième sortie (24) et/ou ledit conduit d'évacuation (45), lorsque ladite section d'extraction (20) est agencée dans ladite configuration de lavage.

4. Machine destinée à l'extraction de purée, ou de jus, d'un produit alimentaire selon la revendication 3, ledit dispositif d'ouverture/fermeture (60), en outre, comprenant au moins un élément d'actionnement (61) agencé pour amener ladite, ou chaque, cloison mobile (65a, 65b) à se déplacer de ladite position de fermeture à ladite position d'ouverture, et inversement.

5. Machine destinée à l'extraction de purée ou de jus d'un produit alimentaire selon la revendication 3 ou 4, ladite deuxième sortie (24) étant réalisée au niveau d'une paroi incurvée (21a) dudit corps de logement principal (21).

6. Machine destinée à l'extraction de purée ou de jus d'un produit alimentaire selon la revendication 5, de même ladite cloison mobile (65a) étant incurvée et étant conçue d'une façon telle qu'elle est positionnée adjacente à ladite paroi incurvée (21a).

7. Machine destinée à l'extraction de purée, ou de jus, d'un produit alimentaire selon la revendication 2, ledit dispositif d'ouverture/fermeture supplémentaire (70) fournissant une cloison mobile supplémentaire (75) associée à un élément d'actionnement (71), ledit élément d'actionnement (71) étant conçu pour déplacer ladite cloison mobile supplémentaire (75) entre ladite configuration d'ouverture et ladite configuration de fermeture de ladite section d'entrée (10), ou inversement.

8. Machine destinée à l'extraction de purée, ou de jus, d'un produit alimentaire, selon l'une quelconque des revendications 3 à 7, entre ladite, ou chaque, cloison mobile (65a, 65b) et ledit corps de logement principal (21) de ladite section d'extraction (20) et/ou ledit conduit d'évacuation (45) des éléments d'étanchéité hydrauliques (66) étant prévus.

9. Machine destinée à l'extraction de purée, ou de jus, d'un produit alimentaire selon la revendication 7, entre ladite cloison mobile supplémentaire (75) et un conduit d'entrée (11) de ladite section d'entrée (10) des éléments d'étanchéité hydrauliques (76) étant prévus.

10. Machine destinée à l'extraction de purée, ou de jus, d'un produit alimentaire, selon l'une quelconque des revendications précédentes, ladite section d'extraction (20) fournissant, en outre, une troisième sortie (28) pour évacuer ledit liquide de lavage, et une soupape d'ouverture/fermeture (80) étant prévue conçue pour ouvrir ou fermer ladite troisième sortie (28), et ledit dispositif de lavage (50) fournissant au moins un conduit de lavage (58) conçu pour introduire une quantité prédéfinie dudit liquide de lavage au niveau de ladite soupape d'ouverture/fermeture (80) de ladite troisième sortie (28) en vue du nettoyage de celle-ci.

11. Machine destinée à l'extraction de purée, ou de jus, d'un produit alimentaire selon la revendication 10, ladite troisième sortie (28) étant positionnée à une hauteur prédéfinie (h) à partir du bas de ladite section d'extraction (20), d'une façon telle que, lorsque le niveau de liquide de lavage à l'intérieur de ladite section d'extraction (20) dépasse un niveau de seuil prédéfini correspondant à ladite hauteur prédéfinie (h), le liquide de lavage est évacué par ladite troisième sortie (28).

12. Machine destinée à l'extraction de purée, ou de jus, d'un produit alimentaire selon la revendication 11, ledit rotor (27) étant actionné par ledit moteur (120) par un arbre (130) et ladite hauteur prédéfinie (h) étant inférieure à la hauteur à laquelle ledit arbre (130) est positionné.

13. Machine destinée à l'extraction de purée ou de jus d'un produit alimentaire selon l'une quelconque des revendications précédentes, ladite section d'entrée (10) comprenant une première partie de bride (15a) et une seconde partie de bride (15b) agencées, lors de l'utilisation, pour être positionnées adjacentes au niveau de faces de contact respectives (16a, 16b) et se mettant en prise mutuellement l'une avec l'autre, ladite seconde partie de bride (15b) fournissant au moins un trou de lavage (59) relié hydrauliquement à ladite source dudit liquide de lavage et conçu pour délivrer dans ladite section d'extraction (20) un flux dudit liquide de lavage possédant une direction qui est sensiblement longitudinale à ladite section d'extraction (20).

14. Machine destinée à l'extraction de purée, ou de jus, d'un produit alimentaire selon la revendication 4, ledit ou chaque élément d'actionnement étant un actionneur choisi dans le groupe constitué par :
- un actionneur pneumatique ;
- un actionneur hydraulique ;
- un actionneur mécanique ;
- un actionneur électromécanique.

15. Procédé permettant le nettoyage d'une machine destinée à l'extraction de purée, ou de jus, d'un produit alimentaire, ledit procédé comprenant les étapes de :
- agencement d'une section d'extraction dans une configuration d'extraction dans laquelle elle est agencée pour séparer un produit alimentaire entrant dans la machine, en un produit principal comprenant ladite purée, ou ledit jus, et en un produit résiduaire, dans ladite section d'extraction un tamis étant monté qui possède une forme cylindrique, ou conique, et qui fournit une pluralité de trous, et un rotor positionné à l'intérieur dudit tamis et conçu pour tourner autour d'un axe de rotation d'une façon telle qu'une force centrifuge s'exerce sur ledit produit alimentaire afin de le forcer contre le tamis et pour séparer le produit alimentaire en ledit produit principal, qui passe à travers lesdits trous dudit tamis, et est évacué à travers une première section d'évacuation, et en un produit résiduaire, qui, à la place, ne passe pas à travers lesdits trous dudit tamis et est évacué à travers une seconde section d'évacuation agencée en aval de ladite première section d'évacuation par rapport à la direction d'avancement du produit dans ladite section d'extraction ; ou alternativement ;
- agencement de ladite section d'extraction dans une configuration de lavage dans laquelle un flux prédéfini d'un liquide de lavage est introduit dans ladite section d'extraction en provenance d'une source, à travers au moins un conduit d'alimentation ; ledit procédé étant **caractérisé en ce qu'**il prévoit une étape de fermeture pour fermer ladite seconde section d'évacuation afin d'empêcher le mouvement dudit liquide de lavage en aval de ladite seconde section d'évacuation avant d'agencer ladite section d'extraction dans ladite configuration de lavage, ou alternativement, une étape d'ouverture pour ouvrir ladite seconde section d'évacuation afin de permettre d'évacuer ledit produit résiduaire de ladite section d'extraction, avant d'agencer ladite section d'extraction dans ladite configuration d'extraction.
